# EUROPEAN PATENT SPECIFICATION

(11) **EP 1 136 295 B1**
(45) Date of publication and mention of the grant of the patent: **19.09.2007**
(21) Application number: 01660052.0
(22) Date of filing: 22.03.2001
(51) Int. Cl.: B60J 7/20

(54) **Tonneau cover for covering the boot of a convertible, and a convertible**
Abdeckelement für Kofferraum eines Cabriolet-Fahrzeuges und Cabriolet-Fahrzeug
Couvre-tonneau pour coffre de véhicule convertible et véhicule convertible

(30) Priority: 23.03.2000 FI 20000684
(43) Date of publication of application: 26.09.2001
(73) Proprietor: Valmet Automotive Oy, 23501 Uusikaupunki (FI)
(72) Inventor: Kinnanen, Matti, 23501 Uusikaupunki (FI)
(74) Representative: Tanskanen, Jarmo Tapio

(56) References cited:
- DE-C- 4 311 240
- DE-C- 4 445 941
- DE-C- 19 714 104
- US-A- 5 743 587
- US-A- 5 775 766

## Description

The present invention relates to a convertible as defined in the preamble of claim 1.

From DE 44 45 941 is known a convertible as in the preamble of claim 1. The document presents a tonneau which can be retracted into a cover box which has a pivoting cover. The cover is formed by an additional flap, which is movable on a boot lid edge area directed to the interior area of the vehicle. The boot lid is pivotably supported on the vehicle bodywork. The cover is movably supported on the boot lid in the direction of the vehicle longitudinal axis. The boot lid has a pivot axis arranged in the lower vehicle end area. The cover is formed by a pivot plate supported on the lower side of the boot lid.

DE4311240 concerns an easy to use wind partition for cabriolet vehicle. It has a hood located against underside of stowaway casing cover with wind partition also inside casing and has hood and wind protection on tensioned frame. The wind partition has the hood located against the underside of the hood casing lid such that it pivots on the lid. This allows the partition to lie inside the hood casing when not in use. The hood and the wind protection are located on a tensioned frame via a net. The hood is able to be locked in position in both the ready to be raised and the out of use position.

US5743587 concerns an apparatus for use in an automotive vehicle having a convertible roof system said apparatus being comprised of an escutcheon which is juxtapositioned proximate with a roof and movable between a functional position and a hidden position. In another aspect of the present invention, an interior trim panel substantially hides a portion of a balance link as viewed from inside a passenger compartment of an automotive vehicle when a roof is in a fully extended position.

In prior art, a convertible provided with a top that can be opened and closed is known. The top comprises an articulated multi-lever top mechanism pivotally connected to the body of the convertible. In the case of a folding soft top, the structure comprises a number of top bows connected to the top mechanism, with a flexible top fabric placed over them. A folding hard top may comprise top panels of a rigid material connected to the top mechanism. The rearward bow, the so-called fifth top bow of a soft top, or the rear edge of a hard top, respectively, forms the rear edge of the top. When the top is in a closed position covering the passenger compartment, the rearward bow or the rear edge of the hard top is in a substantially horizontal position. To allow the top to be stowed away in a lowered position, the vehicle is provided with a boot behind the passenger compartment of the convertible. For covering the boot, the vehicle comprises an openable and closeable tonneau cover made of a rigid material. The tonneau cover is pivotally connected to the vehicle body so that it can be turned between a substantially horizontal closed position, in which it covers the boot, and an open position, which is at an angle to the horizontal direction and in which the tonneau cover does not cover the boot.

When the top is in its closed position extended over the passenger compartment, the rearward bow or the rear edge of the hard top is in a horizontal position upon the horizontal tonneau cover, leaning tightly against its top surface. In the previously known top mechanism, the rearward bow or the rear edge of the hard top is pivotally mounted so that it can be turned about a joint to a raised position, in which it is at an angle to the horizontal direction, so as to permit the cover to be turned to the open position. After the cover has been turned into the open position, the top mechanism can be folded up into the boot, whereupon the tonneau cover can be lowered into the closed position to cover the boot and the top stowed in it. To raise the top back up over the passenger compartment, these actions are performed in a reverse order.

The problem with a convertible like this is that the top mechanism must comprise some kind of mechanism and possibly also an actuator to allow the rearward bow or rear edge to be raised and lowered, which is why the top mechanism is rather complex in construction and expensive. Due to its structural complexity, its manufacturing costs are also high. A further problem is that the raising and lowering motion of the top is slow. Yet another problem is that, because of the actuating mechanism of the rear bow, the top mechanism has a large height in the stowed-away condition and the boot must be designed accordingly with large dimensions, thus reducing the luggage space of the vehicle. A further problem is that, in the closed position of the top, the boot has to be kept empty and cannot be utilized for carrying other goods or luggage as it is covered by a tonneau cover. There is also the problem that, in the closed position of the top, the rearward bow has to be tightly set against the top surface of the cover, so there is a contact between it and the cover, resulting in abrasions and scratches in the top surface in the course of time.

The object of the invention is to eliminate the above-mentioned problems.

A specific object of the invention is to disclose a convertible in which the tonneau cover used on the boot makes it possible to simplify the construction of the top mechanism and reduce its height in the stowed-away condition. A further object of the invention is to disclose a new type of tonneau cover to allow faster raising and lowering of the top. An additional object of the invention is to disclose a tonneau cover that allows the boot to be made smaller so that the luggage space can be increased and the boot can be used as luggage space when the top is in the closed position. Another object is to disclose a tonneau cover whose top surface does not come into contact with the rear bow or the rear edge of a hard top.

The features characteristic of the convertible and tonneau cover are presented in the claims below.

According to the invention, the convertible is characterized in that the dividing joint between the front edge of the rearward cover and the rear edge of the forward cover has been so formed that it substantially follows the shape of the rear edge of the top with a clearance and is sealed against it so that, when the top is in the closed position and the forward cover has been moved away from under the rear edge of the top into said second position below the rearward cover, the tonneau cover can be turned into the open position past the substantially horizontal rear edge of the top without being obstructed by the latter.

In an embodiment of the convertible, the top comprises a number of transverse top bows connected to a top mechanism and comprising a rearward bow constituting the aforementioned rear edge of the top.

In an embodiment of the convertible, the top is a folding hard top comprising rigid top panels connected to a top mechanism, and the rear edge of the rearward top panel constitutes the aforesaid rear edge of the top.

In an embodiment of the convertible, the forward cover is pivotally connected to the rearward cover via a hinge.

In an embodiment of the convertible, the forward cover is connected to the rearward cover via a multi-link parallelogram mechanism.

In an embodiment of the convertible, the tonneau cover is provided with a power means for moving the forward cover between the first position and the second position.

In an embodiment of the convertible, the rear bow or the rear edge of a hard top is combined with a hat rack. The hat rack may be fixedly connected to the rear edge of the top or hinged on the rear edge of the top. The hat rack is preferably fitted to cover an opening between the passenger space and the boot, said opening being formed when the forward cover of the tonneau cover of the boot is moved into the position below the rearward cover.

In the following, the invention will be described in detail by the aid of a few examples of its embodiments with reference to the drawings, wherein
Fig. 1 presents a diagrammatic longitudinal section of an embodiment of the convertible of the invention with the top in the closed position,
Fig. 2 - 5 represent different phases of the operation of opening the top of the convertible in Fig. 1 and use of the tonneau cover of the boot when the top is being stowed away into the boot,
Fig. 6 presents a diagram representing a first embodiment of the tonneau cover of the invention as presented in Fig. 1 - 5, seen from below in position A with the forward cover and the rearward cover placed adjacently to each other,
Fig. 7 presents the tonneau cover of Fig. 6 with the forward cover in position B below the rearward cover,
Fig. 8 presents a diagram representing a second embodiment of the tonneau cover of the invention, seen from below in position A with the forward cover and the rearward cover placed adjacently to each other, and
Fig. 9 presents the tonneau cover of Fig. 8 with the forward cover in position B below the rearward cover.

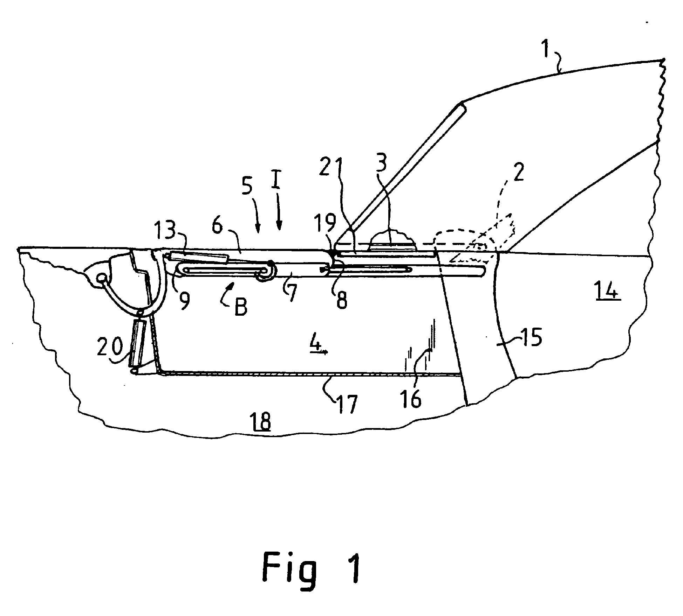

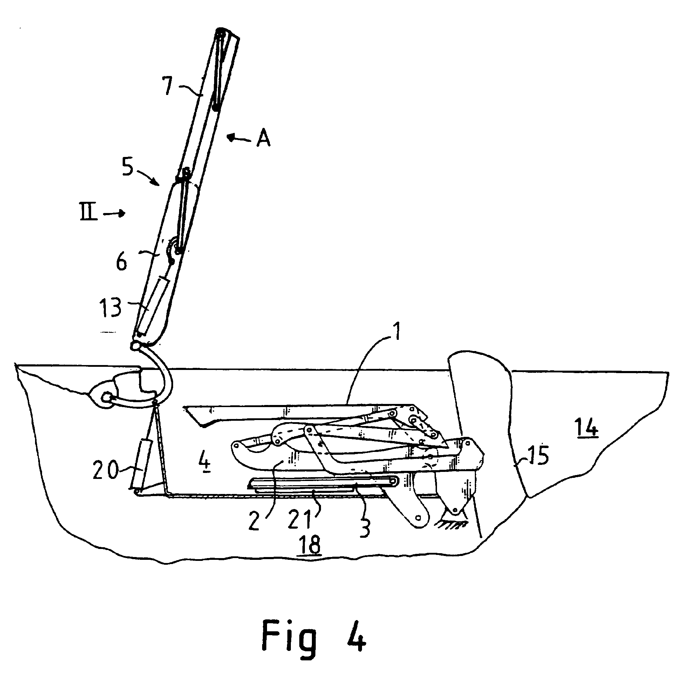

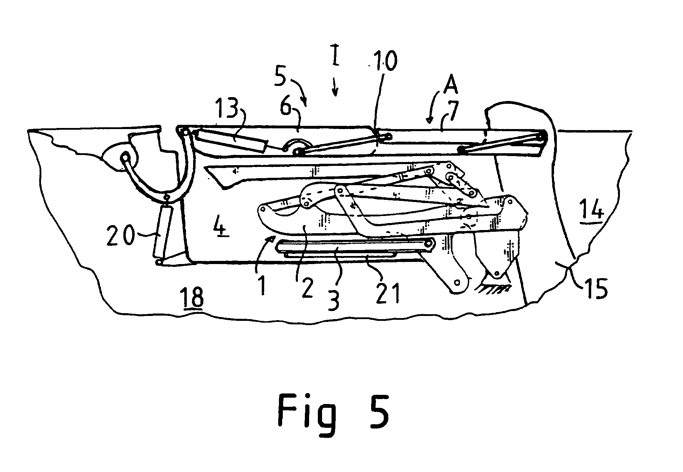

Fig. 1 - 5 present a part of a convertible in a diagrammatic longitudinal section. The convertible comprises a top 1 which can be opened and closed. The top 1 consists of a top mechanism 2 pivotally connected to the body of the convertible in a conventional manner. In Fig. 1- 3, the top mechanism is not shown, being in the closed position, but Fig. 4 and 5 show it in the open or lowered position. The top mechanism 2 is of a design typically used in convertibles, in other words, the main fulcra of the mechanism are located symmetrically in the right and left side structures of the vehicle and it consists of levers pivoted on each other and disposed longitudinally on the sides of the vehicle, with transverse top bows extending between them, said transverse bows determining the shape of the top when the flexible top covering is stretched over the bows. The details of the structure of the top mechanism will not be explained in this context. The top bows include a rearward bow 3, which forms the rear edge of the top 1. Placed at the ends of the transverse bar of the rearward bow 3 are two forward-directed arms pivotally connected by their forward ends to the body. In the case of a hard top, this part 3 can be understood as constituting the rear edge of the hard top.

When the top1 is in the closed position extended over the passenger space 14 as illustrated in Fig. 1, the rearward bow 3 is in a substantially horizontal position. The figure shows the back rest 15 of the back seat, and a space behind the back rest has been formed as a boot 4 into which the top is collapsed when opened. The boot 4 has walls 16 and a bottom 17, which separate the boot 4 from the luggage space 18.

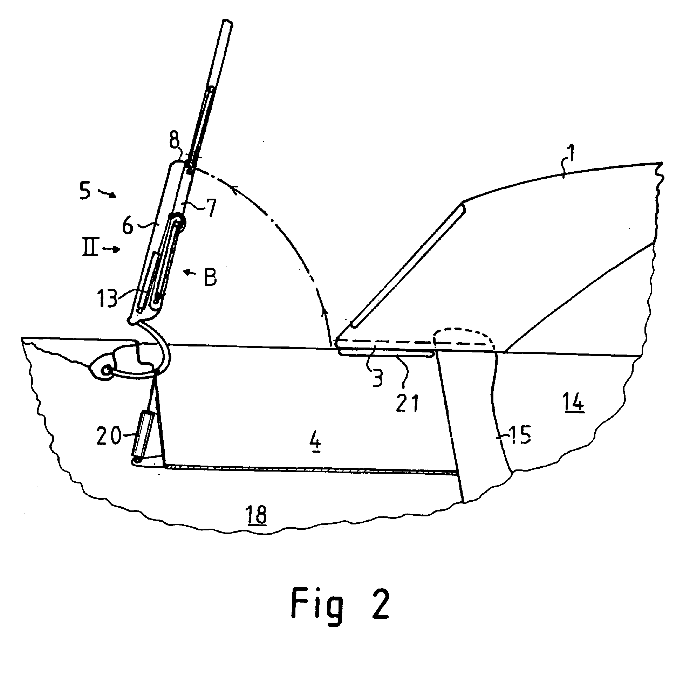

Fig. 1 - 5 show an openable and closeable tonneau cover 5 made of a rigid material for covering the boot 4. The tonneau cover 5 is pivotally connected to the body so that it can be turned between a substantially horizontal closed position I (Fig. 1 and 5) and an open position II (Fig. 2 - 4) in which the tonneau cover is at an angle to the horizontal direction.

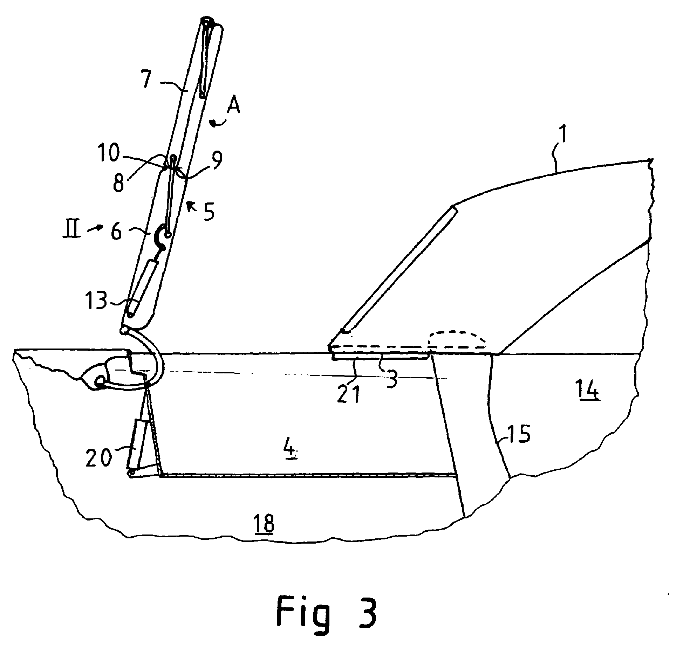

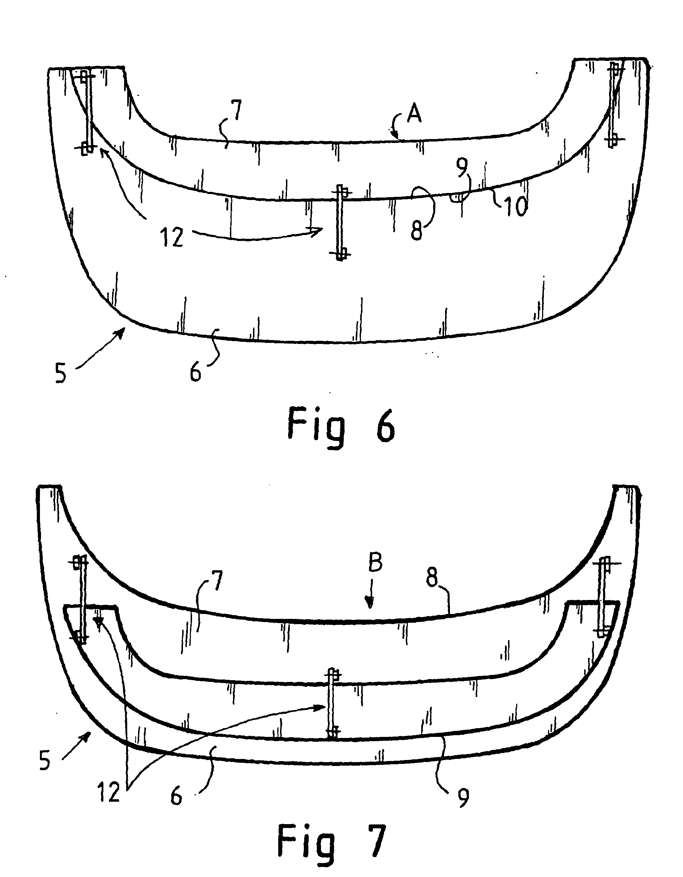

The tonneau cover 5 is divided into two pats so that it comprises a rearward cover 6 pivotally connected to the body and a forward cover 7 so connected to the rearward cover that the forward cover can be moved from a first position A adjacent to the rearward cover (Fig. 3, 4, 5, 6 and 8) into a second position B substantially completely below it (Fig. 1, 2, 7 and 9). The forward cover 7 may be connected to the rearward cover 6 via a multi-link parallelogram mechanism 12 as illustrated in Fig. 1 - 7, so that the forward cover 7 moves from the adjacent position (Fig. 6) into the position below the rearward cover 6 (Fig. 7) while maintaining its orientation and the top side of the forward cover 7 comes to lie face to face with the lower surface of the rearward cover.

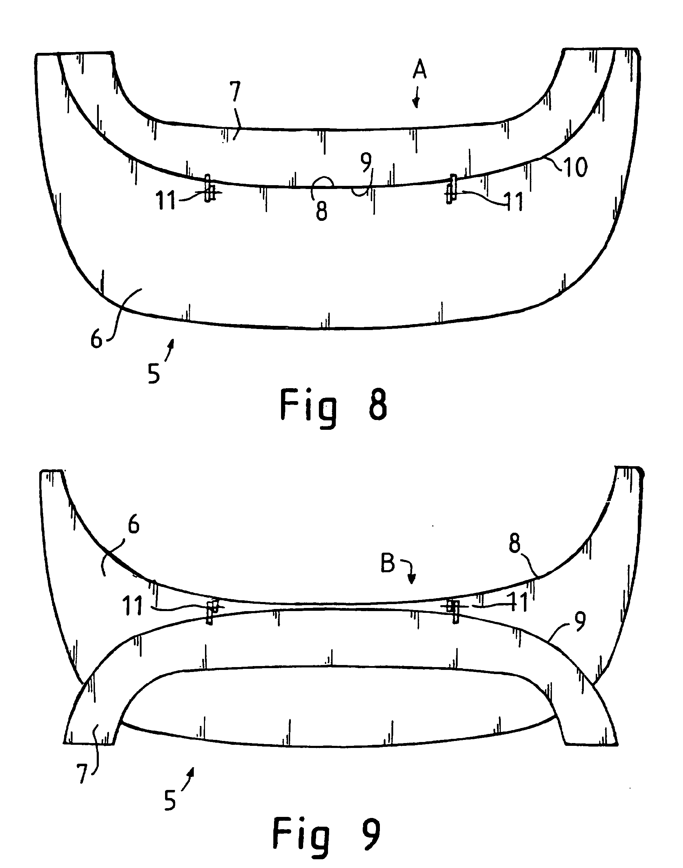

Alternatively, the forward cover 7 can be hinged with hinges 11 on the forward cover 6 so that the forward cover 7 can turn about a hinge axis, in which case the lower side of the forward cover 7 and the lower side of the rearward cover 6 will be facing each other (Fig. 9).

The dividing joint 10 between front edge 8 of the rearward cover 6 and the rear edge 9 of the forward cover 7 has been so formed that it substantially follows the curved shape of the rearward bow 3, yet with a clearance, and sealed against the rearward bow so that, when the top 1 is in the closed position as illustrated in Fig. 1 and the forward cover 7 has been moved from under the rearward bow 3 into the second position B, in which the forward cover 7 is under the rearward cover 6, the tonneau cover 5 can be turned into the open position II past the rearward bow 3 as illustrated in Fig. 2. Thus, it is not necessary to raise the rearward bow 3 at all as it does not obstruct the movement of the tonneau cover 5.

As shown in the diagrammatic figures 1 - 5, the tonneau cover 5 may additionally be provided with a power means 13, e.g. a pressure medium operated cylinder of a telescoping type, for moving the forward cover 7 between the first position A and the second position B.

In the following, the operation of the tonneau cover and the top will be described with reference to Fig. 1 - 5.

In Fig. 1, the top 1 is in a position extended over the passenger space 14. The two-part tonneau cover 5 is in the horizontal position I, covering the boot 4. The forward cover 7 has been moved by the power means 13 into position B under the rearward cover 6, which is also shown in Fig. 7. The edge of the rearward bow 3 and/or the curved front edge 8 of the rearward cover 6 is provided with an elastic sealing 19 to seal the clearance between these parts. The gap appearing in place of the forward cover 7 in front of the rearward cover 6 allows the tonneau cover 5 to be turned into the position shown in Fig. 2 without moving the top or the bow 3. To cover the opening between the front edge 8 of the rearward cover 6 and the rear surface of the back rest 15 of the back seat, the arrangement may include a hat rack 21 connected to the rearward bow 3 as shown in Fig. 1 - 5. The hat rack 21 damps the propagation of noise from the luggage space 18 into the passenger space 14.

If there is no hat rack 21, or if the hat rack 21 can be turned away from the opening, then it will be possible to access the boot 4 from the interior space 14 of the vehicle, so the boot can be used as a stowage for goods. Goods placed in the boot 4 will not obstruct rearward visibility through the rear window.

In Fig. 2, the tonneau cover 5 has been turned by power means 20 from the position shown in Fig. 1 into position II while the top and the rearward bow 3 are still in the same position as in Fig. 1. Thus, to raise the tonneau cover 5, it is not necessary to raise the rearward bow 3.

In Fig. 3, the forward cover 7 has been moved by power means 13 into position A on the front side of the rearward cover 6 so that it lies adjacently to the latter, as in Fig. 6.

In Fig. 4, the top 1 has been folded up into the lowered position in the boot 4 while the tonneau cover 1 is still in the open position II and the forward cover 7 is in position A adjacent to the rearward cover 6.

In Fig. 5, the tonneau cover 1 has been closed to cover the boot 4 and the top 1 contained in it. The forward cover 7 is in position A adjacent to the rearward cover 6 and extends to the back rest 15 of the back seat.

The invention is not restricted to the examples of its embodiments described above; instead, many variations are possible within the scope of the inventive idea defined in the claims.

## Claims

1. Convertible comprising
- a top (1) which can be opened and closed and which comprises an articulated multi-lever top mechanism (2) pivotally connected to the body of the convertible and a rigid rear edge (3) which is in a substantially horizontal position when the top is in a closed position extended over the passenger space,
- a boot (4) disposed behind the passenger space of the convertible, into which boot the top can be lowered when opened, and
- a tonneau cover (5) for covering the boot (4), which cover can be opened and closed and is pivotally connected to the body so that it can be turned between a substantially horizontal closed position (I) and an open position (II) in which the tonneau cover is at an angle to the horizontal direction, the tonneau cover (5) being divided into two parts in such manner that the tonneau cover comprises a rearward cover (6) pivotally connected to the body and a forward cover (7) connected to the rearward cover so that it can be moved from a first position (A) substantially adjacent to the rearward cover into a second position (B) substantially completely below the rearward cover; **characterized in that** the dividing joint (10) between the front edge (8) of the rearward cover (6) and the rear edge (9) of the forward cover (7) has been so formed that it substantially follows the shape of the rear edge (3) of the top with a clearance and is sealed against it so that, when the top (1) is in the closed position and the forward cover (7) has been moved away from under the rear edge (3) of the top into the aforesaid second position (B), the tonneau cover (5) can be turned into the open position (II) past the substantially horizontal rear edge (3) of the top.

2. Convertible as defined in claim 1, **characterized in that** the top (1) comprises a number of transverse top bows which are connected to the top mechanism (2) and which comprise a rearward bow constituting the aforesaid rigid rear edge (3) of the top.

3. Convertible as defined in claim 1, **characterized in that** the top (1) is a folding hard top comprising rigid top panels connected to the top mechanism (2) and the rear edge of the rearward top panel constitutes the aforesaid rigid rear edge (3) of the top.

4. Convertible as defined in any one of claims 1 - 3, **characterized in that** the forward cover (7) is pivotally connected to the rearward cover (6) via a hinge (11).

5. Convertible as defined in any one of claims 1 - 3, **characterized in that** the forward cover (7) is connected to the rearward cover (6) via a multi-link parallelogram mechanism (12).

6. Convertible as defined in any one of claims 1 - 5, **characterized in that** the tonneau cover (5) is provided with a power means (13) for moving the forward cover (7) between the first position (A) and the second position (B).

7. Convertible as defined in any one of claims 1 - 6, **characterized in that** the rearward bow (3) or the rear edge (3) of a hard top is combined with a hat rack (21).

## Patentansprüche

1. Cabriolet, das aufweist:
- ein Verdeck (1), das geöffnet und geschlossen werden kann und das einen beweglichen Verdeckmechanismus (2) mit mehreren Hebeln, der schwenkbar an der Karosserie des Cabriolets verbunden ist, und eine feste, hintere Kante (3) aufweist, die sich in einer im Wesentlichen horizontalen Position befindet, wenn sich das Verdeck in einer geschlossenen Position, die über dem Fahrgastraum gespannt ist, aufweist,
- einen Gepäckraum (4), der hinter dem Fahrgastraum des Cabriolets angeordnet ist, wobei in diesen Gepäckraum das Verdeck herabgelassen werden kann, wenn es geöffnet ist, und
- eine Tonneau-Abdeckung (5), um den Gepäckraum (4) abzudecken, wobei die Abdeckung geöffnet und geschlossen werden kann und schwenkbar mit der Karosserie so verbunden ist, dass sie zwischen einer im Wesentlichen horizontalen, geschlossenen Position (I) und einer offenen Position (II), in der sich die Tonneau-Abdeckung unter einem Winkel zu der horizontalen Richtung befindet, verbunden ist, wobei die Tonneau-Abdeckung (5) in zwei Teile in einer solchen Art und Weise unterteilt ist, dass die Tonneau-Abdeckung eine hintere Abdeckung (6), die schwenkbar an der Karosserie verbunden ist, und eine vordere Abdeckung (7), die mit der hinteren Abdeckung so verbunden ist, dass sie von einer ersten Position (A) im Wesentlichen angrenzend an die hintere Abdeckung in eine zweite Position (B) im Wesentlichen vollständig unterhalb der hinteren Abdeckung bewegt werden kann, aufweist; **dadurch gekennzeichnet, dass** die unterteilende Verbindung (10) zwischen der vorderen Kante (8) der hinteren Abdeckung (6) und der hinteren Kante (9) der vorderen Abdeckung (7) so ausgebildet worden ist, dass sie im Wesentlichen der Form der hinteren Kante (3) des Verdecks mit einem Freiraum folgt und dagegen so abgedichtet ist, dass die Tonneau-Abdeckung (5) dann, wenn sich das Verdeck (1) in der geschlossenen Position befindet und die vordere Abdeckung (7) von unterhalb der hinteren Kante (3) des Verdecks in die vorstehend angegebene zweite Position (B) weg bewegt worden ist, in die offene Position (II) hinter die im Wesentlichen horizontale hintere Kante (3) des Verdecks gedreht werden kann.

2. Cabriolet, wie es in Anspruch 1 definiert ist, **dadurch gekennzeichnet, dass** das Verdeck (1) eine Anzahl von quer verlaufenden Verdeckbögen aufweist, die mit dem Verdeckmechanismus (2) verbunden sind und die einen nach hinten weisenden Bogen, der die vorstehend angegebene feste, hintere Kante (3) des Verdecks bildet, aufweisen.

3. Cabriolet nach Anspruch 1, **dadurch gekennzeichnet, dass** das Verdeck (1) ein sich faltendes Hardtop ist, das feste Verdeckplatten aufweist, die mit dem Verdeckmechanismus (2) verbunden sind, und die hintere Kante der nach hinten weisenden oberen Verdeckplatte die vorstehend angegebene feste, hintere Kante (3) des Verdecks bildet.

4. Cabriolet nach einem der Ansprüche 1 bis 3, **dadurch gekennzeichnet, dass** die nach vorne weisende Abdeckung (7) schwenkbar mit der nach hinten weisenden Abdeckung (6) über ein Gelenk (11) verbunden ist.

5. Cabriolet nach einem der Ansprüche 1 bis 3, **dadurch gekennzeichnet, dass** die vordere Abdeckung (7) mit der hinteren Abdeckung (6) über einen Mehrverbindungs-Parallelogramm-Mechanismus (12) verbunden ist.

6. Cabriolet nach einem der Ansprüche 1 bis 5, **dadurch gekennzeichnet, dass** die Tonneau-Abdeckung (5) mit einer Antriebseinrichtung (13) versehen ist, um die vordere Abdeckung (7) zwischen der ersten Position (A) und der zweiten Position (B) zu bewegen.

7. Cabriolet nach einem der Ansprüche 1 bis 6, **dadurch gekennzeichnet, dass** der rückwärtige Bogen (3) oder die hintere Kante (3) eines Hardtops mit einer Hutablage (21) kombiniert ist.

## Revendications

1. Cabriolet, comprenant :
- un toit (1) qui peut être ouvert et fermé et qui comprend un mécanisme de toit articulé à leviers multiples (2) relié en pivotement à la carrosserie du cabriolet, et un bord arrière rigide (3) qui est en position sensiblement horizontale lorsque le toit est en position fermée étendu au-dessus de l'habitacle,
- un coffre (4) disposé derrière l'habitacle du cabriolet, dans lequel coffre le toit peut être abaissé lorsqu'il est ouvert, et
- un couvre tonneau (5) destiné à couvrir le coffre (4) lequel couvre tonneau peut être ouvert et fermé et il est relié en pivotement à la carrosserie de manière à pouvoir être pivoté entre une position fermée sensiblement horizontale (I) et une position ouverte (II) dans laquelle le couvre tonneau est en angle par rapport à l'horizontale, le couvre tonneau (5) étant divisé en deux parties de telle manière que le couvre tonneau comprend une partie de couverture arrière (6) reliée en pivotement à la carrosserie, et une partie de couverture avant (7) reliée à la partie de couverture arrière de sorte à pouvoir être déplacée d'une première position (A) sensiblement adjacente à la partie de couverture arrière, à une seconde position (B) sensiblement entièrement en dessous de la partie de couverture arrière ; **caractérisé en ce que** le joint de séparation (10) entre le bord avant (8) de la partie de couverture arrière (6) et le bord arrière (9) de la partie de couverture avant (7) a été formé de sorte à suivre sensiblement la forme du bord arrière (3) du toit avec un dégagement et il est scellé contre celui-ci de sorte que, lorsque le toit (1) est dans la position fermée et la partie de couverture avant (7) a été retirée de dessous le bord arrière (3) du toit pour entrer dans la seconde position susmentionnée (B), le couvre tonneau (5) peut être mis en position ouverte (II) au-delà du bord arrière sensiblement horizontal (3) du toit.

2. Cabriolet selon la revendication 1, **caractérisé en ce que** le toit (1) comprend un certain nombre d'arceaux de toit transversaux qui sont reliés au mécanisme de toit (2) et qui comprennent un arceau arrière constituant le bord arrière rigide (3) susmentionné du toit.

3. Cabriolet selon la revendication 1, **caractérisé en ce que** le toit (1) est un toit rigide escamotable comprenant des panneaux de toit rigides reliés au mécanisme de toit (2) et le bord arrière du panneau de toit arrière constitue le bord arrière rigide susmentionné (3) du toit.

4. Cabriolet selon l'une quelconque des revendications 1 à 3, **caractérisé en ce que** la partie de couverture avant (7) est reliée en pivotement à la partie de couverture arrière (6) via une charnière (11).

5. Cabriolet selon l'une quelconque des revendications 1 à 3, **caractérisé en ce que** la partie de couverture avant (7) est reliée à la partie de couverture arrière (6) via un mécanisme rectangulaire à articulations multiples (12).

6. Cabriolet selon l'une quelconque des revendications 1 à 5, **caractérisé en ce que** le couvre tonneau (5) est muni de moyens d'alimentation (13) pour déplacer la partie de couverture avant (7) entre la première position (A) et la seconde position (B).

7. Cabriolet selon l'une quelconque des revendications 1 à 6, **caractérisé en ce que** l'arceau arrière (3) ou le bord arrière (3) d'un toit rigide est combiné à un porte-chapeaux (21).
